# EUROPÄISCHE PATENTANMELDUNG

(11) **EP 1 537 919 A2**
(43) Veröffentlichungstag der Anmeldung: **08.06.2005**
(21) Anmeldenummer: 04090444.3
(22) Anmeldetag: 17.11.2004
(51) Int. Cl.: B09C 1/10

(54) **Verfahren zur mikrobiologischen Dekontamination von mit Schadstoffen belastetem Strassenaufbruch**

(30) Priorität: 18.11.2003 DE 10354242
(71) Anmelder: Norddeutsche Mischwerke GmbH & Co.KG, 13597 Berlin (DE)
(72) Erfinder: Körnig, Matthias, 14554 Seddiner See (DE); Röber, Jan, 13353 Berlin (DE); Dreyer, Ute, 10551 Berlin (DE)
(74) Vertreter: Neumann, Günter

(57) **Zusammenfassung**

Die Erfindung bezieht sich auf ein Verfahren zur mikrobiologischen Dekontamination von mit Schadstoffen, insbesondere mit polycyclischen aromatischen Kohlenwasserstoffen und/oder Phenolen, belastetem pechhaltigen Straßenaufbruch. Es wird eine Mikroorganismen-Mischkultur verwendet, die mindestens 5 der folgenden Mikroorganismen-Arten enthält:
DSM 8219
DSM 20109
DSM 291
DSM 6506
DSM 6612
DSM 4762.

Der kontaminierte Straßenaufbruch wird zunächst gebrochen und auf eine Korngröße ≤ 32 mm, vorzugsweise auf eine Korngröße ≤ 22 mm, zerkleinert. Schon während des Brechens oder unmittelbar danach oder anschließend in einem Mischer und/oder einem Drehrohrreaktor werden mindestens 5 Vertreter der benannten und an die Schadstoffe adaptierten Mikroorganismen unter geigneten Milieubedingungen und gegebenenfalls unter Zuführung von Druckluft zugesetzt. Erforderlichenfalls wird der Straßenaufbruch danach zu einer Miete aufgesetzt. Nach der Behandlung im Drehrohrreaktor und/oder Mischer kann ein Bindemittel, vorzugsweise Zement und/oder eine Bitumenemulsion, zugesetzt werden.

Der so behandelte Straßenaufbruch kann als hydraulisch gebundene Tragschicht oder zur Bodenverfestigung wiederverwertet werden.

## Beschreibung

Die Erfindung betrifft ein Verfahren zur mikrobiologischen Dekontamination von mit Mineralölkohlenwasserstoffen belastetem Straßenaufbruch, insbesondere von pechhaltigem Aufbruch.

Bekannt ist nach RU 2191643 C1 Öl mit einer hohen Konzentration an hochdosierten aromatischen Kohlenwasserstoffen mittels eines Konsortiums von Mikroorganismen, das Pseudomonas putida und Pseudomonas fluorescens enthält, abzubauen.

Aus der DE 43 40 808 C1 geht hervor, dass Pseudomonas putida und Pseudomonas fluorescens zum biologischen Abbau von polycyclischen aromatischen Kohlenwasserstoffen in partilkulären Materialien eingesetzt werden.

Die DE 43 16 260 C1 beschreibt den Abbau von Phenol in teerölimprägnierten Hölzern mittels Pseudomonas putida.

Und aus DE 43 11 981 A1 geht hervor, dass insbesondere in Teerölen enthaltende polycyclische aromatische Kohlenwasserstoffe mittels eines Pseudomons putida enthaltenden Bakteriengemisches biologisch abgebaut werden können.

Mit den genannten technischen Lösungen verbindet sich jedoch der Nachteil, dass sie für den Abbau von Mineralölkohlenwasserstoffen in pechhaltigem Straßenaufbruch nicht geeignet sind.

Nach dem Stand der Technik wird kontaminierter pechhaltiger, insbesondere mit polycyclischen aromatischen Kohlenwasserstoffen (PAK) und Phenolen belasteter Straßenaufbruch zumeist in der Weise behandelt, daß er zunächst nach der Zerkleinerung mit geeigneten Brechern in eine definierte Sieblinie gebracht wird. Da hochbelasteter Straßenaufbruch als besonders überwachungspflichtiger Abfall zu behandeln ist, wird er als Sondermüll auf dafür speziell vorgesehenen Deponien entsorgt. Derartiger Straßenaufbruch geht dadurch dem wirtschaftlichen Kreislauf verloren. Um Gefahren für Leben und Gesundheit des Menschen sowie für die belebte und unbelebte Umwelt auszuschließen, ist der damit verbundene Sicherungsbedarf für derart umweltgefährdende Ablagerungen außerdem mit einem hohen materiellen Aufwand und erheblichen Kosten verbunden.

Geringer belasteter Straßenaufbruch ist in seiner Verwendungsfähigkeit ebenfalls eingeschränkt.

Aufgabe der Erfindung ist es daher, ein Verfahren zur mikrobiologischen Dekontamination von mit Schadstoffen belasteten Straßenaufbruch bereitzustellen, das es ermöglicht, pechhaltigen, insbesondere mit polycyclischen aromatischen Kohlenwasserstoffen (PAK) und/oder Phenolen belasteten Straßenaufbruch in einem Maße zu dekontaminieren, dass er im Verhältnis zum Stand der Technik in größerer Breite wiederverwertet und dem Wirtschaftskreislauf wieder zugeführt werden kann.

Erfindungsgemäß wird die Aufgabe dadurch gelöst, dass zur mikrobiologischen Behandlung des kontaminierte Mineralölkohlenwasserstoffe, insbesondere polycyclische aromatische Kohlenwasserstoffe und/oder Phenole enthaltenden pechhaltigen Straßenaufbruchs eine Mikroorganismen-Mischkultur verwendet wird, die mindestens 5 Vertreter der folgende Mikroorganismen-Arten enthält:

| | |
|---|---|
| *Pseudomonas perfectomarina (stutzeri)* | DSM Nr. 8219 |
| *Cellulommionas flavigena* | DSM Nr. 20109 |
| *Pseudomonas putida* | DSM Nr. 291 |
| *Pseudomonas fluorescens* | DSM Nr. 6506 |
| *Arthrobacter oxydans* | DSM Nr. 6612 |
| *Acidovorax delafieldii* | DSM Nr. 4762. |

Bevorzugte Ausführungsformen des erfindungsgemäßen Verfahrens ergeben sich aus den Merkmalen der Ansprüche 2 bis 11.

Die zur Dekontamination verwendete Mikroorganismensuspension enthält die einzelnen Mikroorganismen zu annähernd gleichen Teilen.

Die mikrobiologische Behandlung des kontaminierten pechhaltigen Straßenaufbruchs erfolgt in der Weise, dass der schadstoffbelastete Straßenaufbruch mit an sich bekannten Brechern zunächst gebrochen und zerkleinert wird, insbesondere auf eine Korngröße ≤ 32 mm, vorzugsweise ≤ 22 mm, anschließend dem zerkleinerten Straßenaufbruch in einem Mischer und/oder einem Drehrohrreaktor unter geeigneten Milieubedingungen die genannten und an die Schadstoffe adaptierten Mikroorganismen zugesetzt werden und danach der so behandelte Straßenaufbruch einer Wiederverwertung zugeführt wird.

In Abhängigkeit von der Art der Schadstoffbelastung und der Konzentration der Schadstoffe kann die mikrobiologische Behandlung des kontaminierten Straßenaufbruches nach dem erfindungsgemäßen Verfahren auf unterschiedliche Weise erfolgen.

So sieht eine bevorzugte Ausführungsform der Erfindung vor, dem kontaminierten Straßenaufbruch bereits während des Brechens oder unmittelbar danach dem gebrochenen und zerkleinerten Straßenaufbruch die genannten und an die Schadstoffe adaptierten Mikroorganismen unter geeigneten Milieubedingungen zuzusetzen und den so behandelten Straßenaufbruch zunächst zu einer Miete aufzusetzen. Erforderlichenfalls wird der Straßenaufbruch dann dem Mischer und/oder dem Drehrohrreaktor zugeführt.

Eine weitere bevorzugte Ausführungsform der Erfindung sieht vor, dass der Straßenaufbruch nach der Behandlung im Mischer und/oder Drehrohrreaktor zu einer Miete aufgesetzt und erforderlichenfalls danach nochmals in dem Mischer und/oder Drehrohrreaktor gegebenenfalls unter Zugabe weiterer Mikroorganismensuspension und von Nährstoffen behandelt wird.

Bei einem Phenolgehalt des Straßenaufbruches von annähernd 1100 µg/l und sehr hohen Belastungen an polycyclischen aromatischen Kohlenwasserstoffen hat es sich als vorteilhaft erwiesen, den Straßenaufbruch nach der Behandlung im Drehrohrreaktor zu einer Miete aufzusetzen und anschließend gegebenenfalls in einem Mischer unter Zugabe weiterer Mikroorganismensuspension, von Wasser und Nährstofflösung nochmals zu behandeln und ihn danach auf einer abgedichteten Fläche zu einer annähernd pyramidenförmigen Miete aufzusetzen. Erforderlichenfalls wird der zur Miete aufgesetzte schadstoffbelastete Straßenaufbruch belüftet.

Als besonders vorteilhaft hat sich gezeigt, dem kontaminierten Straßenaufbruch unter Zugabe der Mikroorganismensuspension im Mischer und/oder Drehrohrreaktor bei einer Temperatur von 12°C bis 37°C, einer Rotationsgeschwindigkeit des Drehrohrreaktors 0,3 Umdrehungen/Stunde bis 3,0 Umdrehungen/Stunde, einem Wasser-Gehalt von ca. 70% der maximalen Wasserhaltekapazität des belasteten Straßenaufbruches sowie einem Durchsatz 0,5 t/Stunde bis 1,0 t/Stunde und gebenenfalls Zuführung von Druckluft zu behandeln.
Mit dieser bevorzugten Ausführung des erfindungsgemäßen Verfahrens verbindet sich der zusätzliche Vorteil eines geringen Flächenbedarfs sowie einer hohen Produktivität durch den kontinuierlich arbeitenden Drehrohrreaktor.

Ein weitere bevorzugte Ausführungsform des erfindungsgemäßen Verfahrens sieht vor, dem Straßenaufbruch nach der Behandlung im Drehrohrreaktor und/oder Mischer ein Bindemittel, vorzugsweise Zement und/oder Bitumenemulsion, zuzusetzen. Durch die Zugabe von Bindemittel, insbesondere Zement und die Verdichtung des mikrobiologisch behandelten Straßenaufbruches beim Einbau werden die Einbaugrenzwerte dauerhaft und weit unterschritten. Das eröffnet die Möglichkeit, pechhaltige Recyclingstoffe auch in Wasserschutzgebieten, Städten und Ortslagen anzuwenden.

Der auf diese Weise mikrobiologisch behandelte Straßenaufbruch kann anschließend wieder in den Wirtschaftskreislauf eingeführt und beispielsweise zur Flächenbefestigung verwendet werden.

Die Dekontamination von mit Pech, insbesondere mit polycyclischen aromatischen Kohlenwasserstoffen (PAK) und/oder Phenolen, belastetem Straßenaufbruch durch die erfindungsgemäße Mikroorganismenmischpopulation ist in hohem Maße überraschend. Es ist bekannt, dass besonders die polycyclischen aromatischen Kohlenwasserstoffe durch ihre teilweise schlechte Wasserlöslichkeit, aber auch Phenole als wesentliche Bestandteile von Pech, in dem hochverdichteten Straßenaufbruch hinsichtlich ihres Abbaues zu den Problemstoffen zählen und nicht ohne weiteres angreifbar sind. Es ist deshalb ein besonderer Vorzug des erfindungsgemäßen Verfahrens, dass die in die Gruppe III A der MAK-Liste eingestuften carcinogenen polycyclischen aromatischen Kohlenwasserstoffe auf ein solch niedriges Niveau abgebaut werden, dass eine Wiederverwertung beispielsweise als hydraulisch gebundene Tragschicht (HGT) oder als Bodenverfestigung möglich ist.

Die verwendeten Mikroorganismen sind nach der EG-Richtlinie 90/676/EWG vom 26. November 1990 in die Risokogruppe 1 eingestuft. Bei der Risokogruppe 1, die die niedrigste Einstufungsmöglichkeit darstellt, handelt es sich um biologische Arbeitstoffe, bei denen es unwahrscheinlich ist, dass sie beim Menschen eine Krankheit verursachen.

Im folgenden soll das erfindungsgemäße Verfahren zur mikrobiologischen Dekontamination von schadstoffbelastetem Asphaltstraßenaufbruch an Ausführungsbeispielen näher erläutert werden.

Der Gehalt an Phenolen wird dazu an Hand des Phenolindex nach DIN 38 409 H 16 im Eluat und die Konzentration der polycyclischen aromatischen Kohlenwasserstoffe analog Methode zur Bestimmung von 16 ausgewählten polyaromatischen Kohlenwasserstoffen (EPA 610) der US-amerikanischen Umweltbehörde, Environmental Protection Agency, im Feststoff und zum Teil im Eluat bestimmt. Um Hinweise auf eventuelle Metaboliten zu erhalten, wurde bei einigen Versuchen zusätzlich ein GC-MS-Screening der Feststoff- und Eluatextrakte durchgeführt.

Die Mikroorganismen wurden von der Deutschen Sammlung von Mikroorganismen und Zellkulturen bezogen. Durch Adaption an unterschiedliche Schadstoffkombinationen und Schadstoffkonzentrationen wurde deren Abbauleistung erhöht.

Die aeroben Bakterien werden als Gefrierkonserven bei - 80° C ± 10° C in einer Rinderserumalbumin-Glycerin-Mischung aufbewahrt. Vor der Sanierungssaison werden die Bakterien aufgetaut und über einen Zeitraum von 8 Wochen bis 12 Wochen mit Phenolen und polycyclischen aromatischen Kohlenwasserstoffen mit 2-Ring-, 3-Ring- und 4-Ringsystemen als Kohlenstoff- und Energiequelle in Nährstofflösung angezogen. Die Anzucht erfolgt in den Stufen: 50 ml, 100 ml, 500 ml, 2 1, 10 1, 50 1, 100 1, 500 1, 2.000 1, 10.000 1 bis 20.000 1 bei einem pH-Wert von 7,0 bis 7,5 und einem Sauerstoffgehalt > 5 mg/l. Die Subkultivierung erfolgt bei einer Zelldichte von 5*10⁷ bis 1*10⁹ Zellen/ml. Als Nährstofflösung zur Anzucht der Mikroorganismen-Mischkultur dient vorwiegend eine Ammonium- und Nitratstickstoff, Phosphat, Schwefel, Natrium, Magnesium, Kalium, Calcium und Spurenelelemente enthaltende Lösung, der bis zur Anzuchtstufe 500 1 tyndallisierter Sand mit einer Korngröße von ca. 3 mm zugesetzt wird.

Die in den folgenden Ausführungsbeispielen erfindungsgemäß verwendete Mikroorganismen-Mischkultur enthält alle der folgenden Mikroorganismen zu annähernd gleichen Anteilen

| | |
|---|---|
| DSM | 8219 |
| DSM | 20109 |
| DSM | 291 |
| DSM | 6506 |
| DSM | 6612 |
| DSM | 4762. |

Es handelt sich um eine Mischpopulation aus aeroben Bakterien.

### Schadstoffabbau nach dem erfindungsgemäßen Verfahren:

### Ausführungsbeispiel 1

Das Beispiel bezieht sich auf die mikrobiologische Dekontamination von pechhaltigem Asphaltstraßenaufbruch mit einer Anfangsbelastung an Phenolen von 220 µg/l und an polycyclischen aromatischen Kohlenwasserstoffen von 39 mg/kg. Von ca. 700 t mit an sich bekannten Brechern auf eine Korngröße s 22 mm gebrochenen Straßenasphalts wurden ca. 600 t in einer Kaltmischanlage eines Doppelwellenzwangsmischers unter Zusatz von phosphat-, nitrat-, ammonium-, sulfat- und magnesiumhaltiger Nährstofflösung und Wasser sowie der Mikroorganismensuspension bis eine Endkonzentration von 10⁸ KBE/gTS erreicht wurde, homogenisiert. Die Wasserzugabe wurde in Abhängigkeit vom Feuchtigkeitsgehalt des kontaminierten Straßenaufbruches so gesteuert, daß der zu behandelnde Aufbruch einen Wassergehalt von ca. 70% seiner maximalen Wasserhaltekapazität aufwies.

Nach einer Verweildauer im Mischer von ca. 2 Minuten und bei einer Temperatur von ca. 25°C wurde der so behandelte Straßenasphalt auf einer abgedichteten Fläche zu einer pyramidenförmigen Miete mit einer Höhe von ca. 2 m aufgesetzt und dort in dieser Form gelagert. Der pechhaltige Straßenaufbruch wies nach 45 Tagen eine Schadstoffbelastung, gemessen am Phenolindex von 48 µg/l und an polycyclischen aromatischen Kohlenwasserstoffen von 19,8 mg/kg auf. Die Richtwerte an Phenol von 100 µg/l und an PAK von 25 mg/kg wurden unterschritten. Damit wird den Anforderungen entsprochen, die sich aus der BTR-RC-Richtlinie (Brandenburgische Technische Richtlinie zur Wiederverwendung von Recycling-Baustoffen) ergeben und die vorsieht, daß ein PAK-Gehalt von <25 mg/kg des Materials erreicht sein muß, um z.B. dessen Wiederverwendung als Bestandteil von Heiß-Asphalt zu gewährleisten.

### Ausführungsbeispiel 2

300 t hoch belasteter pechhaltiger Straßenaufbruch (Phenolindex: 1110 µg/l; Konzentration an polycyclischen Aromaten: 468 mg/kg) mit einer Korngröße s 22 mm wurden in einem Doppelwellenzwangsmischer mit Nährstofflösung, Wasser und Mikroorganismensuspension entsprechend Ausführungsbeispiel 1 versetzt. Nach einer Verweildauer von ca. 2 Minuten im Mischer wurde der homogenisierte Straßenaufbruch auf einer abgedichteten Fläche zu einer Miete aufgesetzt und dort 100 Tage gelagert. Innerhalb von 14 Tagen wurde der Phenolgehalt des Eluats, ausgedrückt mit dem Phenolindex, auf 19 µg/l abgebaut. Der Gehalt an polycyclischen aromatischen Kohlenwasserstoffen im Eluat konnte nach 100 Tagen auf 2 µg/l gesenkt werden.

Der erfindungsgemäß mikrobiologisch behandelte Asphaltstraßenaufbruch genügte den an Straßenausbaustoffe gestellten Anforderungen und wurde auch für diesen Zweck verwendet.

### Ausführungsbeispiel 3

Ebenso wie in Ausführungsbeispiel 1 wurde auf eine Korngröße von s 22 mm gebrochener verklebter und extrem hochbelasteter Asphaltstraßenaufbruch eingesetzt. Der Straßenasphalt wies eine Belastung an Phenolen, ausgedrückt mit dem Phenolindex, von 1.100 µg/l und eine Konzentration an polycyclischen aromatischen Kohlenwasserstoffen von 5.900 mg/kg auf. Dieser hoch belastete Asphaltstraßenaufbruch wurde in einen Drehrohrreaktor gefördert, der mit einer Rotationsgeschwindigkeit von 0,5 Umdrehungen pro Stunde, der Zuführung von Druckluft und einem Durchsatz von 0,5 t/h betrieben wurde, und in diesem Reaktor unter Zusatz von Nährstofflösung, Wasser und Mikroorganismensuspension mit einer Zusammensetzung wie in den vorangegangenen Ausführungsbeispielen behandelt. Danach wurde der Straßenaufbruch in einem Doppelwellenzwangsmischer homogenisiert und nach einer Verweildauer im Mischer von ca. 2,5 Minuten anschließend zu einer Miete aufgesetzt. Nach 3 Monaten war der Phenolgehalt des Eluats, ausgedrückt mit dem Phenolindex, von anfangs 1.100 µg/l auf 58 µg/l abgebaut. Die polycyclischen Aromaten wurden von anfangs 5.900 mg/kg auf den Wert von 360 mg/kg abgebaut. Der auf diese Weise behandelte Asphaltstraßenaufbruch wurde als Straßenausbaustoff verwendet.

### Ausführungsbeispiel 4

Ca. 800 t Asphaltstraßenaufbruch (Phenolindex: 44,6 µg/l; Konzentration an polycyclischen Aromaten: 758 mg/kg), davon Benz(a)pyren 5,94 mg/kg) wurden wie in Ausführungsbeispiel 1 auf eine Korngröße von s 22 mm gebrochen und in einem Doppelwellenzwangsmischer während des Mischens mit ca. 20 m³ Kulturlösung berieselt, der Aufbruch mit einer Mikroorganismensuspension entsprechend Ausführungsbeispiel 1 angeimpft und anschließend zu Mieten aufgesetzt.

Die Kulturlösung wurde hinsichtlich ihrer Nährstoffzusammensetzung und ihrer Keimzahl mit folgenden Ergebnissen vermessen:

| **Parameter** | **Verfahren** | **Einheit** | **Impflösung** |
|---|---|---|---|
| Keimzahl 20°C | TVO | KBE/ml | 6,7*10⁸ |
| Keimzahl 36°C | TVO | KBE/ml | 4,7*10⁸ |
| pH-Wert | DIN 38 404 CS | | 7,32 |
| Kalium | DIN ISO 9964 | mg/l | 174 |
| Magnesium | DIN ISO 11885 | mg/l | 139 |
| Ammonium | Spectroquant | mg/l | 112 |
| Nitrat | Spectroquant | mg/l | 200 |
| Nitrit | DIN EN 26777 | mg/l | 17,0 |
| o-Phosphat | Spectroquant | mg/l | 214 |
| (TVO - Trinkwasserverordnung vom 21.05.2001; BGBl. I Nr. 24, Seite 959; | | | |
| Spektroquant - Serie gebrauchsfertiger Reagenzienmischungen für die analytische Bestimmung von Salzen). | | | |

Die analytische Betrachtung des Abbaus der Schadstoffe erfolgte nach den Regeln der Haufwerksbeprobung, d.h. es wurden aus dem Ansatz zunächst mittels Radlader 5 Teilhaufwerke á ca. 1 m³ gebildet, aus diesen mittels Spaten je 10 Teilproben á ca. 2 kg entnommen. Somit wurden insgesamt ca. 100 kg Probenmenge des Ansatzes gemischt, nach den Regeln der kreuzweisen Viertelung geteilt und auf eine Untersuchungsmenge von ca. 15 kg reduziert.

Es hat sich gezeigt, dass der Phenolabbau bis zur vollständigen Mineralisierung zu CO₂ und Wasser verlief. Die mit anfänglich 45 µg/l verhältnismäßig geringe Konzentration an Phenolen war innerhalb von 20 Tagen abgebaut. Dass der Abbau dieser relativ geringen Konzentration dennoch 20 Tage erforderte, läßt sich dadurch erklären, dass die Mikroorganismen zunächst das "reichhaltigere" Angebot der polycyclischen aromatischen Kohlenwasserstoffe als C-Nahrungsquelle nutzen.

Hinsichtlich des PAK-Abbaus war innerhalb von bereits 20 Tagen eine Reduzierung des hochbelasteten Asphaltaufbruchs von anfänglich 758 mg/kg auf 167 mg/kg festzustellen.

Im Verlauf der Dekontamination konnten des weiteren durch GC-MS-Screening der Feststoff- und Eluatextrakte keine "asphaltfremden", eventuell toxischen Abbauzwischenprodukte festgestellt werden, was den Schluß zuläßt, dass die abgebauten PAK vollständig zu CO₂ und Wasser mineralisieren.

### Ausführungsbeispiel 5

Ca. 800 t Asphaltstraßenaufbruch (Phenolindex: 450 µg/l; Konzentration an polycyclischen Aromaten: 98,9 mg/kg) wurden wie in Ausführungsbeispiel 1 auf eine Korngröße von s 22 mm gebrochen und in einem Doppelwellenzwangsmischer während des Mischens mit ca. 20 m³ Kulturlösung berieselt, der Aufbruch mit einer Mikroorganismensuspension entsprechend Ausführungsbeispiel 1 angeimpft und anschließend zu Mieten aufgesetzt.

Die Kulturlösung wurde hinsichtlich ihrer Nährstoffzusammensetzung und ihrer Keimzahl mit folgenden Ergebnissen vermessen:

| **Parameter** | **Verfahren** | **Einheit** | **Impflösung** |
|---|---|---|---|
| | | | |
| Keimzahl 20°C | TVO | KBE/ml | 5,6*10⁸ |
| Keimzahl 36°C | TVO | KBE/ml | 3,0*10⁸ |
| | | | |
| pH-Wert | DIN 38 404 CS | | 7,20 |
| Kalium | DIN ISO 9964 | mg/l | 3370 |
| Magnesium | DIN ISO 11885 | mg/l | 372 |
| Ammonium | Spectroquant | mg/l | 200 |
| Nitrat | Spectroquant | mg/l | 250 |
| Nitrit | DIN EN 26777 | mg/l | 0,89 |
| o-Phosphat | Spectroquant | mg/l | 53 |

Die analytische Betrachtung des Abbaus der Schadstoffe erfolgte entsprechend Ausführungsbeispiel 4.

Die anfänglich hohe Konzentration an Phenolen von 450 µg/l war bereits nach 3 Tagen vollständig abgebaut. Nach zwei aufeinanderfolgenden Beprobungen waren Phenole nicht mehr nachweisbar. Der schnelle Abbau dieser relativ hohen Konzentration läßt sich durch den vorrangigen "Zugriff" der Mikroorganismen auf das durch die Phenole gegenüber den PAK "reichhaltigere" C-Nahrungsangebot erklären.
Der Phenolabbau verdeutlicht zugleich die sehr gute Stammleistung der eingesetzten Mikroorganismen und deren optimale Anpassung in dem verwendeten Nährstoffmilieu an die Abbaubedingungen.

Hinsichtlich des PAK-Abbaus war innerhalb von 5 Tagen eine Reduzierung von 98,9 mg/kg um 67 % auf 32,3 mg/kg nachweisbar.

Auch in diesem Beispiel hat sich gezeigt, dass im Verlauf der Dekontamination keine "asphaltfremden", eventuell toxischen Abbauzwischenprodukte nachweisbar waren und die abgebauten PAK insofern vollständig zu CO₂ und Wasser mineralisieren.

Es konnte des weiteren festgestellt werden, dass der PAK-Abbau nicht nur an der Oberfläche des gebrochenen Asphaltaufbruches erfolgte, sondern sich als repräsentativ für das gesamte Material darstellt.

### Ausführungsbeispiel 6:

1020 t Straßenaufbruch mit unterschiedlicher Schadstoffbelastung (Phenolindex: 10 µg/l bis 240 µg/l; Konzentration an polycyclischen Aromaten: 2 mg/kg bis 706 mg/kg ) wurden vor der Aufgabe auf den Brecher zunächst mit Wasser befeuchtet und mit einem Radlader vorgemischt. Das hatte unter anderem den Vorteil, dass die Staubbelastung beim Brechen und befördern des gebrochenen Materials deutlich eingedämmt werden konnte. Unmittelbar nach dem Brechen wurde dem auf eine Korngröße von s 22 mm zerkleinerten und auf dem Austragsförderband des Brechers befindlichen Straßenaufbruch die Suspension aus Mikroorganismen und Nährlösung zugeführt. Die Mikroorganismensuspension wurde in einer Konzentration zugesetzt, daß eine Endkonzentration von 10⁷ KBE/gTS bis 10⁹ KBE/gTS im kontaminierten Material vorhanden war.
Der so behandelte Straßenaufbruch wurde zu 2,0 m bis 2,5 m hohen Mieten aufgesetzt. Einige Mieten wurden mit Folien abgedeckt, um Feuchtigkeitsverluste zu vermeiden und die anderen Mieten in regelmäßigen Abständen mit Wasser besprengt, um einen möglichst ausgeglichenen Feuchtigkeitshaushalt zu gewährleisten.
Nach 12-tägigem mikrobiologischem Abbau wurde ein PAK-Gehalt im Feststoff von 16 mg/kg und im Eluat von 3,1 µg/l gemessen. Der Phenolindex lag unterhalb der Nachweisgrenze. Der so behandelte Straßenaufbruch konnte ohne weitere Behandlung im Mischer und/oder Drehrohrreaktor direkt als hydraulisch gebundene Bodenbefestigung einer Wiederverwendung zugeführt werden. Die Erfindung erweist sich damit auch als eine baustellengerechte, robuste und mobile Technologie zur Dekontamination von insbesondere pechhaltigem Straßenaufbruch.

## Patentansprüche

1. Verfahren zur mikrobiologischen Dekontamination von mit Mineralölkohlenwasserstoffen, insbesondere polycyclischen aromatischen Kohlenwasserstoffen und/oder Phenolen, belastetem pechhaltigen Straßenaufbruch, **dadurch gekennzeichnet, dass** zur Dekontamination eine Mikroorganismen-Mischkultur verwendet wird, die mindestens 5 Vertreter der folgenden Mikroorganismen-Arten enthält:
| | |
|---|---|
| DSM | 8219 |
| DSM | 20109 |
| DSM | 291 |
| DSM | 6506 |
| DSM | 6612 |
| DSM | 4762. |

2. Verfahren nach Anspruch 1, **dadurch gekennzeichnet, dass** eine Mikroorganismen-Mischkultur eingesetzt wird, die Vertreter der einzelnen Mikroorganismen-Arten zu annähernd gleichen Anteilen enthält.

3. Verfahren nach Anspruch 1 oder 2, **dadurch gekennzeichnet, dass**
- der kontaminierte Straßenaufbruch mit an sich bekannten Brechern zunächst gebrochen und zerkleinert wird,
- dem Straßenaufbruch bereits während des Brechens oder unmittelbar danach dem gebrochenen und zerkleinerten Straßenaufbruch mindestens 5 Vertreter der im Anspruch 1 benannten und an die Schadstoffe adaptierten Mikroorganismen unter geeigneten Milieubedingungen zugesetzt werden,
- der Straßenaufbruch anschließend in Mieten aufgesetzt wird und
- nach dem mikrobiologischen Abbau der Schadstoffe der so behandelte Straßenaufbruch anschließend einer Wiederverwertung zugeführt wird.

4. Verfahren nach Anspruch 3, **dadurch gekennzeichnet, dass** der Straßenaufbruch, nachdem er zu einer Miete aufgesetzt wurde, einem Mischer und/oder einem Drehrohrreaktor zugeführt und danach wiederverwendet wird.

5. Verfahren nach Anspruch 1 oder 2, **dadurch gekennzeichnet, dass**
- der kontaminierte Straßenaufbruch mit an sich bekannten Brechern zunächst gebrochen und zerkleinert wird,
- anschließend dem zerkleinerten Straßenaufbruch in einem Mischer und/oder einem Drehrohrreaktor mindestens 5 Vertreter der im Anspruch 1 benannten und an die Schadstoffe adaptierten Mikroorganismen unter geeigneten Milieubedingungen zugesetzt werden und
- nach dem mikrobiologischem Abbau der Schadstoffe der so behandelte Straßenaufbruch anschließend einer Wiederverwertung zugeführt wird.

6. Verfahren nach einem der Ansprüche 3 bis 5, **dadurch gekennzeichnet, dass** der kontaminierte Straßenaufbruch auf eine Korngröße s 32 mm, vorzugsweise auf eine Korngröße s 22 mm, zerkleinert wird und die Mikroorganismen-Mischkultur mit annähernd gleichen Anteilen der einzelnen Mikroorganismen-Arten eingesetzt wird.

7. Verfahren nach einem der Ansprüche 4 bis 6, **dadurch gekennzeichnet, dass** der Straßenaufbruch nach der Behandlung im Mischer und/oder Drehrohrreaktor zu einer Miete aufgesetzt und erforderlichenfalls danach nochmals in dem Mischer und/oder Drehrohrreaktor gegebenenfalls unter Zugabe weiterer Mikroorganismensuspension gemäß Anspruch 1 und von Nährstoffen behandelt und danach erforderlichenfalls nochmals zu einer Miete aufgesetzt wird.

8. Verfahren nach einem der Ansprüche 3 bis 7, **dadurch gekennzeichnet, dass** dem Straßenaufbruch die Mikroorganismensuspension so zugesetzt wird, daß eine Endkonzentration von 10⁶ KBE/gTS bis 10⁹ KBE/gTS im kontaminierten Material erreicht wird.

9. Verfahren nach einem der Ansprüche 4 bis 8, **dadurch gekennzeichnet, dass** der Straßenaufbruch im Mischer und/oder Drehrohrreaktor bei einer Temperatur von 12°C bis 37°C, einem Wasser-Gehalt von ca. 70% der maximalen Wasserhaltekapazität des belasteten Straßenaufbruches und gebenenfalls unter Zuführung von Druckluft behandelt wird.

10. Verfahren nach einem der Ansprüche 4 bis 9, **dadurch gekennzeichnet, dass** der Drehrohrreaktor mit einer Rotationsgeschwindigkeit von 0,3 Umdrehungen/Stunde bis zu 3,0 Umdrehungen/Stunde und mit einem Durchsatz von 0,5 t/Stunde bis 1,0 t/Stunde und der Mischer mit einem Durchsatz von 80 t/Stunde bis 100 t/Stunde betrieben werden.

11. Verfahren nach einem der Ansprüche 4 bis 10, **dadurch gekennzeichnet, dass** dem Straßenaufbruch nach der Behandlung im Drehrohrreaktor und/oder Mischer ein Bindemittel, vorzugsweise Zement und/oder eine Bitumenemulsion, zugesetzt wird.
